# EUROPEAN PATENT SPECIFICATION

(11) **EP 3 096 087 B1**
(45) Date of publication and mention of the grant of the patent: **03.01.2018**
(21) Application number: 16170711.2
(22) Date of filing: 20.05.2016
(51) Int. Cl.: F24D 3/08, F24D 3/18, F24D 17/02, F24D 19/10, F24F 5/00, F24F 11/00

(54) **AIR-CONDITIONING AND WARM WATER SUPPLY UNIT**
KLIMAANLAGE UND WARMWASSERVERSORGUNGSVORRICHTUNG
CLIMATISATION ET UNITÉ D'ALIMENTATION EN EAU CHAUDE

(30) Priority: 22.05.2015 JP 2015104966
(43) Date of publication of application: 23.11.2016
(73) Proprietor: DAIKIN INDUSTRIES, LIMITED, Osaka-shi Osaka 530 (JP); Daikin Europe N.V., 8400 Oostende (BE)
(72) Inventor: CHIKAMI, Hideo, 8400 Oostende (BE); VANSTEENKISTE, Wim, 8400 Oostende (BE)
(74) Representative: Global IP Europe Patentanwaltskanzlei

(56) References cited:
- EP-A2- 2 770 398
- US-A1- 2014 223 940

## Description

### TECHNICAL FIELD

The present invention relates to an air-conditioning and warm water supply unit. The present invention specifically relates to an air-conditioning and warm water supply unit in which a fluid is sent from a heat exchanger, which is configured to transfer heat from refrigerant to the fluid, alternatively to either one of an air conditioner and a warm water supply tank in which the heat of the fluid is utilized.

### BACKGROUND ART

There are known in the art air-conditioning and warm water supply units in which a fluid is sent from a heat exchanger, which is configured to transfer heat from refrigerant to the fluid, alternatively to either one of an air conditioner and a warm water supply tank in which the heat of the fluid is used (for example, Patent Literature 1 (Japanese Laid-open Patent Application No. 2013-148266)).

In such air-conditioning and warm water supply units, it may happen that the fluid circuit is blockaded for some reason and an abnormality of the flow rate is occurred in the fluid circuit. I Occurrence of such an abnormality of the flow rate can be detected by providing the air-conditioning and warm water supply unit with a flow rate detection means configured to detect the flow rate of the fluid and utilizing the detection results thereof.

EP 2 770 398 A2 discloses an air-conditioning and warm water supply unit, comprising: a heat exchanger configured to transfer heat from a refrigerant to a fluid; a fluid inflow tube connected to the heat exchanger, and configured to pass the fluid flowing into the heat exchanger; a fluid outflow tube connected to the heat exchanger, and configured to pass the fluid flowing from the heat exchanger; a fluid supply part connected to a forward external pipe, the forward external pipe being configured to pass the fluid flowing to an air conditioner disposed in an air-conditioned space; a first supply tube connecting the fluid outflow tube and the fluid supply part; a fluid return part connected to a return external pipe, the return external pipe configured to pass the fluid returning from the air conditioner; a first return tube connecting the fluid inflow tube and the fluid return part; a warm water supply tank configured to heat water by heat supplied from the fluid; a second supply tube connecting the fluid outflow tube and the warm water supply tank; a second return tube connecting the fluid inflow tube and the warm water supply tank; a switching mechanism configured to switch between a first state in which the fluid flows from the fluid outflow tube to the air conditioner via the first supply tube, and a second state in which the fluid flows from the fluid outflow tube to the warm water supply tank via the second supply tube; a pump arranged to the fluid outflow tube or the fluid inflow tube; a flow rate detection means configured to detect a flow rate of the fluid; and a control unit.

### SUMMARY OF THE INVENTION

### <Technical Problem>

Although the occurrence of an abnormality of the flow rate can be detected from the flow rate detection results, it is not possible to discover whether the cause of the abnormality is present on the warm water supply tank side or the air conditioner side. Therefore, an operator tasked with taking measures against the abnormality of the flow rate is required to spend long time to investigate which pipe or the like causes the abnormality. In particular, pipes on the air conditioner side are often long, and it takes a long time to investigate the entire fluid circuit even when the cause of the abnormality is present in the pipes or the like on the warm water supply tank side. An object of the present invention is to provide an air-conditioning and warm water supply unit in which a fluid is sent from a heat exchanger, which is configured to transfer heat from refrigerant to the fluid, alternatively to either one of an air conditioner and a warm water supply tank in which the heat of the fluid is utilized, wherein it is possible to easily discover whether the cause of the abnormality of the flow rate of the fluid is present in the pipes or the like on the air conditioner side or on the warm water supply tank side.

### <Solution to Problem>

An air-conditioning and warm water supply unit according to a first aspect is provided with a heat exchanger, a fluid inflow tube, a fluid outflow tube, a fluid supply part, a first supply tube, a fluid return part, a first return tube, a warm water supply tank, a second supply tube, a second return tube, a switching mechanism, a pump, a flow rate detection means, and a control unit. The heat exchanger is configured to transfer heat from a refrigerant to a fluid. The fluid inflow tube is connected to the heat exchanger. The fluid is configured to flow into the heat exchanger through the fluid inflow tube. The fluid outflow tube is connected to the heat exchanger. The fluid is configured to flow out from the heat exchanger through the fluid outflow tube. A forward external pipe, through which the fluid is configured to flow to an air conditioner disposed in an air-conditioned space, is connected to the fluid supply part. The first supply tube connects the fluid outflow tube and the fluid supply part. A return external pipe, through which the fluid returning from the air conditioner is configured to flow, is connected to the fluid return part. The first return tube connects the fluid inflow tube and the fluid return part. In the warm water supply tank, water is configured to be heated by heat supplied from the fluid. The second supply tube connects the fluid outflow tube and the warm water supply tank. The second return tube connects the fluid inflow tube and the warm water supply tank. The switching mechanism is configured to switch between a first state in which the fluid flows from the fluid outflow tube to the air conditioner via the first supply tube, and a second state in which the fluid flows from the fluid outflow tube to the warm water supply tank via the second supply tube. The pump is arranged to the fluid outflow tube or the fluid inflow tube. The flow rate detection means is configured to detect a flow rate of the fluid. The flow rate detection means is arranged to the fluid outflow tube or the fluid inflow tube. The control unit is configured to determine that the flow rate is abnormal when the fluid flow rate detected by the flow rate detection means is in a predetermined range. When the flow rate is determined to be abnormal, the control unit confirms whether the switching mechanism is in the first state or the second state, assesses whether the abnormal flow rate occurs while the fluid flowing to the air conditioner or the abnormal flow rate occurs while the fluid flowing to the warm water supply tank, and informs an assessment result.

In the air-conditioning and warm water supply unit according to the first aspect, when the flow rate is determined to be abnormal, it is assessed whether the fluid flows toward the air conditioner or the fluid flows toward the warm water supply tank, and assessment result is informed. Therefore, it is possible to easily discover whether the cause of the abnormality of the flow rate is present in the pipes or the like on the warm water supply tank side or on the air conditioner side, and shorten the work time for the operator performing repairs.

An air-conditioning and warm water supply unit according to a second aspect is the air-conditioning and warm water supply unit according to the first aspect, wherein the control unit is further configure to determine whether or not the flow rate is abnormal while informing the assessment result, and when the control unit assesses that the flow rate is abnormal while the fluid is flowing in the other side from the informing assessment result, the control unit informs both that the abnormal flow rate occurs while the fluid flowing to the air conditioner and that the abnormal flow rate occurs while the fluid flowing to the warm water supply tank.

In the air-conditioning and warm water supply unit according to the second aspect, it is possible to discover that there are the causes of the abnormality of the flow rate in the pipes or the like both on the warm water supply tank side and the air conditioner side. Operators performing repairs therefore can cope with the abnormality without omission.

### <Advantageous Effects of Invention>

In the air-conditioning and warm water supply unit according to the first aspect, when the flow rate is determined to be abnormal, it is assessed whether the fluid flows toward the air conditioner or the fluid flows toward the warm water supply tank, and assessment result is informed. Therefore, it is possible to easily discover whether the cause of the abnormality of the flow rate is present in the pipes or the like on the warm water supply tank side or on the air conditioner side, and shorten the work time for the operator performing repairs.

In the air-conditioning and warm water supply unit according to the second aspect, it is possible to discover that there are the causes of the abnormality of the flow rate in the pipes or the like both on the warm water supply tank side and the air conditioner side. Therefore, operators performing repairs can cope with the abnormality without omission.

### BRIEF DESCRIPTION OF THE DRAWINGS

FIG. 1 is a schematic diagram of an air-conditioning and warm water supply system including an air-conditioning and warm water supply unit according to an embodiment of the present invention.
FIG. 2 is a flowchart of the process executed by the control unit of the air-conditioning and warm water supply unit when the fluid flows at an abnormal flow rate within the fluid circuit of the air-conditioning and warm water supply system according to FIG. 1.

### DESCRIPTION OF EMBODIMENTS

An air-conditioning and warm water supply unit 100 according to an embodiment of the present invention is described below based on the drawings. The following embodiment is merely a specific example of an air-conditioning and warm water supply unit according to an embodiment of the present invention, and can be modified within a range that does not deviate from the scope of the invention.

### (1) Overall Configuration

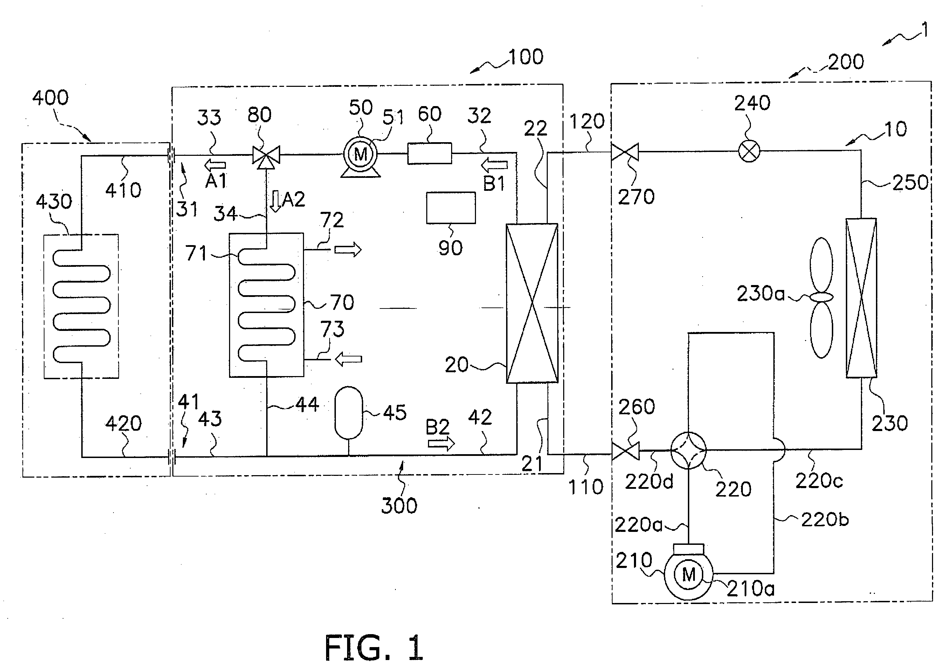

FIG. 1 is a schematic diagram of an air-conditioning and warm water supply system 1 including the air-conditioning and warm water supply unit 100 according to an embodiment of the present invention.

The air-conditioning and warm water supply system 1 is capable of heating/cooling a fluid as a medium with a vapor-compression heat pump cycle. In the present embodiment, the fluid is water. However, the type of fluid is not limited to water. The fluid may be e.g. brine or the like. The air-conditioning and warm water supply system 1 performs air-warming/air-cooling or supplies warm water by utilizing the heat of the fluid heated/cooled by the refrigerant.

The air-conditioning and warm water supply system 1 includes primarily a heat source unit 200, a gas refrigerant communication tube 110, a liquid refrigerant communication tube 120, the air-conditioning and warm water supply unit 100, and an air conditioner unit 400.

### (2) Detailed Configuration

The heat source unit 200, the gas refrigerant communication tube 110, the liquid refrigerant communication tube 120, the air-conditioning and warm water supply unit 100, and the air conditioner unit 400 are explained in detail below.

### (2-1) Heat Source Unit

The heat source unit 200 is arranged outdoors. The heat source unit 200 is connected to a usage-side heat exchanger 20 of the air-conditioning and warm water supply unit 100, described hereinafter, via the gas refrigerant communication tube 110 and the liquid refrigerant communication tube 120. The heat source unit 200, together with the usage-side heat exchanger 20, the gas refrigerant communication tube 110, the liquid refrigerant communication tube 120, and other components, configures a refrigerant circuit 10 inside which refrigerant circulates. For example, R-410A or another HFC-based refrigerant is sealed within the refrigerant circuit 10. The type of refrigerant is given here by way of example, and not by way of limitation.

The heat source unit 200 has primarily a compressor 210, a switching mechanism 220, a heat-source-side heat exchanger 230, an expansion valve 240, a gas-side shutoff valve 260, and a liquid-side shutoff valve 270.

### (2-1-1) Compressor

The compressor 210 is a mechanism configured to compress refrigerant. The compressor 210 in this embodiment is a sealed compressor having a rotary, scroll, or other type of positive-displacement compression element (not shown) and a compressor motor 210a which drives the positive-displacement compression element accommodated in a casing (not shown). The rotational speed (i.e., the operating frequency) of the compressor motor 210a can be varied by an inverter, whereby the capacity of the compressor 210 can be varied.

### (2-1-2) Switching Mechanism

The switching mechanism 220 is configured to be capable of switching between a heat-source-side heat-radiating operation state in which the heat-source-side heat exchanger 230 functions as a radiator of refrigerant, and a heat-source-side evaporating operation state in which the heat-source-side heat exchanger 230 functions as an evaporator of refrigerant. The switching mechanism 220 is a four-way switching valve in this embodiment.

The switching mechanism 220 is connected to a discharge tube 220a through which refrigerant discharged from the compressor 210 flows, an intake tube 220b through which refrigerant drawn into the compressor 210 flows, a first heat-source-side gas refrigerant tube 220c connected at one end to the gas side of the heat-source-side heat exchanger 230, and a second heat-source-side gas refrigerant tube 220d connected at one end to the gas-side shutoff valve 260.

The switching mechanism 220 can switch to a state that the discharge tube 220a and the first heat-source-side gas refrigerant tube 220c communicate with each other, and the second heat-source-side gas refrigerant tube 220d and the intake tube 220b communicate with each other (corresponding to the heat-source-side heat-radiating operation state; refer to the dashed lines of the switching mechanism 220 in FIG. 1). The switching mechanism 220 also can switch to a state that the discharge tube 220a and the second heat-source-side gas refrigerant tube 220d communicate with each other, and the first heat-source-side gas refrigerant tube 220c and the intake tube 220b communicate with each other (corresponding to the heat-source-side evaporating operation state, refer to the solid lines of the switching mechanism 220 in FIG. 1).

The switching mechanism 220 is not limited to a four-way switching valve. For example, the switching mechanism 220 may be configured by combining a plurality of electromagnetic valves, so as to have the function of switching the refrigerant flow direction in the same manner as described above.

### (2-1-3) Heat-SourcerSide Heat Exchanger

The heat-source-side heat exchanger 230 functions as a radiator or evaporator of refrigerant by exchanging heat between the refrigerant and outdoor air. A heat-source-side liquid refrigerant tube 250, connected at one end to the liquid-side shutoff valve 270, is connected to the liquid side of the heat-source-side heat exchanger 230. The first heat-source-side gas refrigerant tube 220c, connected at one end with the switching mechanism 220, is connected to the gas side of the heat-source-side heat exchanger 230. Outdoor air which exchanges heat with the refrigerant is supplied to the heat-source-side heat exchanger 230 by a fan 230a.

### (2-1-4) Expansion Valve

The expansion valve 240 is an electric expansion valve which depressurizes refrigerant flowing through the heat-source-side liquid refrigerant tube 250. The opening degree of the expansion valve 240 is variable. The expansion valve 240 is arranged on the heat-source-side liquid refrigerant tube 250.

### (2-1-5) Gas-Side Shutoff Valve

The gas-side shutoff valve 260 is arranged to the connecting part of the second heat-source-side gas refrigerant tube 220d and the gas refrigerant communication tube 110.

### (2-1-6) Liquid-Side Shutoff Valve

The liquid-side shutoff valve 270 is arranged to the connecting part of the heat-source-side liquid refrigerant tube 250 and the liquid refrigerant communication tube 120.

### (2-2) Gas Refrigerant Communication Tube

The gas refrigerant communication tube 110 is a pipe connecting the second heat-source-side gas refrigerant tube 220d and a usage-side gas refrigerant tube 21 of the air-conditioning and warm water supply unit 100, described hereinafter. Specifically, one end of the gas refrigerant communication tube 110 is connected to the gas-side shutoff valve 260 to which the second heat-source-side gas refrigerant tube 220d is connected. The other end of the gas refrigerant communication tube 110 is connected to the usage-side gas refrigerant tube 21 of the air-conditioning and warm water supply unit 100.

When the switching mechanism 220 is in the heat-source-side heat-radiating operation state, refrigerant flowing through the usage-side heat exchanger 20 and out from the air-conditioning and warm water supply unit 100 is then guided into the intake tube 220b of the compressor 210 through the gas refrigerant communication tube 110 and the second heat-source-side gas refrigerant tube 220d. When the switching mechanism 220 is in the heat-source-side evaporating operation state, refrigerant discharged from the compressor 210 and flowing out of the heat source unit 200 is then guided into the usage-side heat exchanger 20 of the air-conditioning and warm water supply unit 100 through the gas refrigerant communication tube 110 and the usage-side gas refrigerant tube 21.

### (2-3) Liquid Refrigerant Communication Tube

The liquid refrigerant communication tube 120 is a pipe connecting the heat-source-side liquid refrigerant tube 250 and a usage-side liquid refrigerant tube 22 of the air-conditioning and warm water supply unit 100, described hereinafter. Specifically, one end of the liquid refrigerant communication tube 120 is connected to the liquid-side shutoff valve 270 to which the heat-source-side liquid refrigerant tube 250 is connected. The other end of the liquid refrigerant communication tube 120 is connected to the usage-side liquid refrigerant tube 22 of the air-conditioning and warm water supply unit 100.

When the switching mechanism 220 is in the heat-source-side heat-radiating operation state, refrigerant flowing out of the heat source unit 200 via the heat-source-side heat exchanger 230, which functions as a radiator of :refrigerant, is guided to the usage-side heat exchanger 20 of the air-conditioning and warm water supply unit 100 through the liquid refrigerant communication tube 120 and the usage-side liquid refrigerant tube 22. When the switching mechanism 220 is in the heat-source-side evaporating operation state, refrigerant flowing through the usage-side heat exchanger 20 and out from the air-conditioning and warm water supply unit 100 is guided to the heat-source-side heat exchanger 230, which functions as an evaporator of refrigerant, through the liquid refrigerant communication tube 120 and the heat-source-side liquid refrigerant tube 250.

### (2-4) Air-Conditioning and Warm Water Supply Unit

The air-conditioning and warm water supply unit 100 is arranged indoors. The air-conditioning and warm water supply unit 100, which is connected to the heat source unit 200 via the gas refrigerant communication tube 110 and the liquid refrigerant communication tube 120, constitutes a part of the refrigerant circuit 10. The air-conditioning and warm water supply unit 100, together with the air conditioner unit 400 described hereinafter, configures a fluid circuit 300 inside of which fluid circulates.

In the air-conditioning and warm water supply unit 100, heat exchange between the refrigerant flowing in the refrigerant circuit 10 and the fluid flowing in the fluid circuit 300 is conducted in the usage-side heat exchanger 20, described hereinafter. The air-conditioning and warm water supply unit 100 supplies fluid heated/cooled by the refrigerant in the usage-side heat exchanger 20 to an air Conditioner 430 of the air conditioner unit 400, described hereinafter. The air-conditioning and warm water supply unit 100 also uses the fluid heated by the refrigerant in the usage-side heat exchanger 20 to heat water in a warm water supply tank 70, described hereinafter.

The air-conditioning and warm water supply unit 100 is primarily provided with the usage-side heat exchanger 20, a fluid inflow tube 42, a fluid outflow tube 32, a fluid supply part 31, a first supply tube 33, a fluid return part 41, a first return tube 43, the warm water supply tank 70, a second supply tube 34, a second return tube 44, a pump 50, a flow sensor 60, a switching mechanism 80, and a control unit 90.

The configurations of the air-conditioning and warm water supply unit 100 are described below.

### (2-4-1) Usage-Side Heat Exchanger

The usage-side heat exchanger 20 functions as an evaporator or radiator of refrigerant by conducting heat exchange between the refrigerant flowing in the refrigerant circuit 10 and the fluid flowing in the fluid circuit 300. The usage-side heat exchanger 20 is a heat exchanger which transfers heat (warming heat/cooling heat), which is supplied from the refrigerant flowing in the refrigerant circuit 10, to the fluid.

The usage-side liquid refrigerant tube 22, connected at one end to the liquid refrigerant communication tube 120, is connected to the liquid side of the passage of the usage-side heat exchanger 20 through which the refrigerant flows. The usage-side gas refrigerant tube 21, connected at one end to the gas refrigerant communication tube 110, is connected to the gas side of the passage of the usage-side heat exchanger 20 through which the refrigerant flows. The fluid inflow tube 42 is connected to the inlet side of the passage of the usage-side heat exchanger 20 through which the fluid flows. The fluid outflow tube 32 is connected to the outlet side of the passage of the usage-side heat exchanger 20 through which the fluid flows.

### (2-4-2) Fluid Inflow Tube

The fluid inflow tube 42 is a pipe connecting the usage-side heat exchanger 20 with the first return tube 43 and the second return tube 44, described hereinafter. The fluid inflow tube 42 is connected at one end to the inlet side of the passage of the usage-side heat exchanger 20 through which the fluid flows, and is connected at the other end to the part where the first return tube 43 and the second return tube 44 merge. Fluid flows into the usage-side heat exchanger 20 through the fluid inflow tube 42 (refer to the arrow B2 in FIG. 1).

The fluid inflow tube 42 is provided with an expansion tank 45 configured to accommodate fluid expanded in the fluid circuit 300 due to the temperature rise. The expansion tank 45 is an airtight tank.

### (2-4-3) Fluid Outflow Tube

The fluid outflow tube 32 is a pipe connecting the usage-side heat exchanger 20 with the first supply tube 33 and the second supply tube 34, described hereinafter. The fluid outflow tube 32 is connected at one end to the outlet side of the passage of the usage-side heat exchanger 20 through which the fluid flows. The fluid outflow tube 32 is connected at the other end to the switching mechanism 80, described hereinafter. The switching mechanism 80 is disposed in the part where the first supply tube 33 and the second supply tube 34 branch. The fluid, to which heat is supplied from the refrigerant in the usage-side heat exchanger 20, flows out of the usage-side heat exchanger 20 through the fluid outflow tube 32 (refer to the arrow B1 in FIG. 1).

### (2-4-4) Fluid Supply Part

The fluid supply part 31 is a pipe connecting part to which a forward external pipe 410 of the air conditioner unit 400, through which the fluid flows to the air conditioner 430 of the air conditioner unit 400, is connected. The fluid supply part 31 is a flange-type connecting part, but is not limited thereto. The fluid supply part 31 may be, e.g., a screw-type connecting part or the like.

### (2-4-5) First Supply Tube

The first supply tube 33 is a pipe connecting the fluid outflow tube 32 and the fluid supply part 31. One end of the first supply tube 33 is connected to the fluid supply part 31. The other end of the first supply tube 33 is connected to the switching mechanism 80, which is disposed to a branching part where the fluid outflow tube 32 branches into the first supply tube 33 and the second supply tube 34. The fluid flows through the first supply tube 33, from the fluid outflow tube 32 side (the switching mechanism 80 side) to the fluid supply part 31.

### (2-4-6) Fluid Return Part

The fluid return part 41 is a pipe connecting part to which a return external pipe 420 of the air conditioner unit 400, through which the fluid returning from the air conditioner 430 of the air conditioner unit 400 flows, is connected. The fluid return part 41 is a flange-type connecting part, but is not limited thereto. The fluid return part 41 may be, e.g., a screw-type connecting part or the like.

### (2-4-7) First Return Tube

The first return tube 43 is a pipe connecting the fluid inflow tube 42 and the fluid return part 41. One end of the first return tube 43 is connected to the fluid return part 41. The other end of the first return tube 43 is connected to a merging part where the first return tube 43 and the second return tube 44 merge with the fluid inflow tube 42. The fluid flows through the first return tube 43, from the fluid return part 41 to the fluid inflow tube 42 (the merging part of the first return tube 43 and the second return tube 44).

### (2-4-8) Warm Water Supply Tank

The warm water supply tank 70 is a container in which water to be used for the warm water supply is stored. At the warm water supply tank 70, the water stored inside is heated by heat supplied from the fluid flowing in the fluid circuit 300.

A warm water supply tube 72 for sending heated water to a faucet, a shower, and/or the like is connected to the warm water supply tank 70. Also a water supply tube 73 for replenishing water consumed by the warm water supply is connected to the warm water supply tank 70.

The warm water supply tank 70 has a heat exchange coil 71 accommodated therein. The heat exchange coil 71 is a heat exchanger that functions as a heater of the water in the warm water supply tank 70 by conducting heat exchange between the fluid circulating in the fluid circuit 300 and the water in the warm water supply tank 70. The second supply tube 34, described hereinafter, is connected to one end of the heat exchange coil 71. The second return tube 44, described hereinafter, is connected to the other end of the heat exchange coil 71. The fluid as a medium flows into the heat exchange coil 71 from the second supply tube 34. After passing through the heat exchange coil 71, the fluid flows out of the heat exchange coil 71 from the second return tube 44.

### (2-4-9) Second Supply Tube

The second supply tube 34 is a pipe connecting the fluid outflow tube 32 and the warm water supply tank 70. One end of the second supply tube 34 is connected to the heat exchange coil 71 of the warm water supply tank 70. The other end of the second supply tube 34 is connected with the switching mechanism 80. The switching mechanism 80 is disposed to the branching part where the fluid outflow tube 32 branches into the first supply tube 33 and the second supply tube 34. The fluid flows through the second supply tube 34, from the fluid outflow tube 32 side (the switching mechanism 80 side) to the heat exchange coil 71 of the warm water supply tank 70.

### (2-4-10) Second Return Tube

The second return tube 44 is a pipe connecting the fluid inflow tube 42 and the warm water supply tank 70. One end of the first return tube 43 is connected to the heat exchange coil 71 of the warm water supply tank 70. The other end of the second return tube 44 is connected to the merging part where the first return tube 43 and the second return tube 44 merge with the fluid inflow tube 42. The fluid flows through the second return tube 44, from the heat exchange coil 71 of the warm water supply tank 70 to the fluid inflow tube 42 (the merging part of the first return tube 43 and the second return tube 44).

### (2-4-11) Pump

The pump 50 is a pump to pressure the fluid and thereby circulate the fluid in the fluid circuit 300. In the pump 50, a centrifugal or positive-displacement pump element (not shown) is driven by a pump motor 51. The pump 50 is provided to the fluid outflow tube 32 in this embodiment, but no limitation is provided thereby. The pump 50 may be provided to the fluid inflow tube 42. The pump motor 51 is configured so that the rotational speed thereof (i.e., the operating frequency) can be varied by an inverter, whereby the capacity of the pump 50 can be varied.

### (2-4-12) Flow Sensor

The flow sensor 60 is an example of the flow rate detection means. The flow sensor 60 detects the flow rate of the fluid. The flow sensor 60 is disposed to the fluid outflow tube 32. More specifically, the flow sensor 60 is disposed to the fluid outflow tube 32, on upstream of the pump 50 (between the usage-side heat exchanger 20 and the pump 50).

The flow sensor 60 is a vortex flowmeter that determines flow rate by, e.g., measuring the number of Kármán vortices generated downstream of a vortex shedder disposed in the flow, but no limitation is provided thereby. Flowmeters using various detection methods suitable for detecting the flow rate of a fluid can be applied as the flow sensor 60.

The mounted position of the flow sensor 60 is merely an example and is not provided by way of limitation. For example, the flow sensor 60 may be disposed to the fluid inflow tube 42. The flow sensor 60 may also be provided downstream of the pump 50. However, in cases where there is a possibility that the detection precision of the flow sensor 60 will be negatively affected when the flow sensor 60 is disposed close to and downstream of the pump 50, e.g., in a case where the flow sensor 60 is a vortex flowmeter, the flow sensor 60 is preferably disposed upstream of the pump 50.

### (2-4-13) Switching Mechanism

The switching mechanism 80 is a switching mechanism which switches between a first state in which the fluid flows from the fluid outflow tube 32 via the first supply tube 33 to the air conditioner 430 of the air conditioner unit 400, described hereinafter (refer to the arrow A1 in FIG. 1), and a second state in which the fluid flows from the fluid outflow tube 32 via the second supply tube 34 to the warm water supply tank 70 (refer to the arrow A2 in FIG. 1). In other words, the fluid flowing out from the usage-side heat exchanger 20 is sent alternatively to the air conditioner 430 or the warm water supply tank 70 by the switching mechanism 80.

The switching mechanism 80 is, e.g., a three-way electromagnetic valve disposed to the branching part where the fluid outflow tube 32 branches into the first supply tube 33 and the second supply tube 34. The fluid outflow tube 32, the first supply tube 33, and the second supply tube 34 are connected to the switching mechanism 80. The switching mechanism 80 is not limited to a three-way electromagnetic valve, however. For example, the switching mechanism 80 may be configured by combining a plurality of electromagnetic valves so as to have the function of switching the direction of refrigerant flow in the same manner as described above.

### (2-4-14) Control unit

The control unit 90 has a microcomputer, a memory, and/or the like (not shown) as primary components.

The control unit 90 is electrically connected to, e.g., the pump motor 51, the switching mechanism 80, and/or other components. The control unit 90 is designed to exchange control signals and the like with a remote control unit (not shown) for the air conditioner 430 and/or the warm water supply tank 70, which is operated by the user. The control unit 90 is also designed to exchange various signals with a control unit (not shown) of the heat source unit 200.

The control unit 90 is also electrically connected with the flow sensor 60. The control unit 90 receives the fluid flow rate detection results transmitted from the flow sensor 60. Furthermore, the control unit 90 is electrically connected with other sensors (not shown) provided to the fluid circuit 300 and the warm water supply tank 70, and the control unit 90 acquires detection results (temperature etc.) regarding the fluid state transmitted from the sensors, the water temperature in the warm water supply tank 70, and/or other information.

The microcomputer executes programs stored in the memory, whereby the control unit 90 controls the actions of the components of the air-conditioning and warm water supply unit 100 based on the control signals received from the remote control unit, the detection results from the sensors, and other factors.

When the fluid flow rate detected by the flow sensor 60 is in a predetermined range while the air-conditioning and warm water supply unit 100 is operating, the control unit 90 determines that the flow rate of the fluid in the fluid circuit 300 is abnormal, as is described hereinafter. The details of the process performed by the control unit 90 when the flow rate is abnormal are described hereinafter.

### (2-5) Air Conditioner Unit

The air conditioner unit 400 has the air conditioner 430 installed in the air-conditioned target space, the forward external pipe 410, and the return external pipe 420.

In FIG. 1, there is one air conditioner 430, but no limitation is provided thereby; a plurality of air conditioners 430 may be provided. When a plurality of air conditioners 430 is provided, the air conditioner unit 400 may be provided with a valve or the like for separately switching between supply and non-supply of the fluid to the air conditioner 430.

### (2-5-1) Forward External Pipe

The forward external pipe 410 connects the air conditioner 430 and the fluid supply part 31. In the forward external pipe 410, fluid flows from the fluid supply part 31 to the air conditioner 430.

### (2-5-2) Return External Pipe

The return external pipe 420 connects the air conditioner 430 and the fluid return part 41. In the return external pipe 420, fluid flows from the air conditioner 430 to the fluid return part 41.

### (2-5-3) Air Conditioner

The air conditioner 430 is a heat exchanger that functions as a heat emitter of the fluid circulating through the fluid circuit 300. The forward external pipe 410 is connected to the fluid inlet of the air conditioner 430. The return external pipe 420 is connected to the fluid outlet of the air conditioner 430.

The air conditioner 430 is, specifically, a radiator, a floor cooling/heating panel, and/or the like.

For example, when the air conditioner 430 is a radiator, the air conditioner 430 is mounted alongside a wall or the like in a room. For example, when the air conditioner 430 is a floor cooling/heating panel, the air conditioner 430 is provided underneath the floor or the like in a room.

### (3) Actions of Air-Conditioning and Warm Water Supply System

The actions of the air-conditioning and warm water supply system 1 will be described below.

### (3-1) Actions of Devices Configuring Refrigerant Circuit

The actions of the devices configuring the refrigerant circuit 10 of the air-conditioning and warm water supply system 1 are described, using as an example a case in which the fluid flowing in the fluid circuit 300 is heated by the refrigerant flowing in the refrigerant circuit 10.

When the fluid flowing in the fluid circuit 300 is heated by the refrigerant flowing in the refrigerant circuit 10, the switching mechanism 220 in the refrigerant circuit 10 is switched to the heat-source-side evaporating operation state (shown by the solid lines in the switching mechanism 220 in FIG. 1).

In the refrigerant circuit 10 in this state, refrigerant at a low pressure in the refrigeration cycle is drawn into the compressor 210 through the intake tube 220b, compressed to a high pressure in the refrigeration cycle in the compressor 210, and discharged to the discharge tube 220a. A control unit (not shown) of the heat source unit 200 performs capacity control of the compressor 210 (control of the rotational speed of the compressor motor 210a) based on the detection results pertaining to the state of the refrigerant detected by various sensors (not shown) provided to the refrigerant circuit 10. The high-pressure refrigerant discharged to the discharge tube 220a is sent through the switching mechanism 220, the second heat-source-side gas refrigerant tube 220d, the gas refrigerant communication tube 110, and the usage-side gas refrigerant tube 21, to the usage-side heat exchanger 20. The high-pressure refrigerant sent to the usage-side heat exchanger 20 exchanges heat with the fluid circulating through the fluid circuit 300 and supplies heat (radiates heat) to the fluid in the usage-side heat exchanger 20. Having supplied heat to the fluid in the usage-side heat exchanger 20, the refrigerant flows through the heat-source-side liquid refrigerant tube 250 via the usage-side liquid refrigerant tube 22 and the liquid refrigerant communication tube 120, and the refrigerant is depressurized in the expansion valve 240 to a low-pressure gas-liquid two-phase state and sent to the heat-source-side heat exchanger 230. The opening degree of the expansion valve 240 is controlled by the control unit of the heat source unit 200 based on the detection results pertaining to the state of the refrigerant detected by the various sensors (not shown) provided to the refrigerant circuit 10. The low-pressure refrigerant sent to the heat-source-side heat exchanger 230 exchanges heat with the outdoor air supplied by the fan 230a, and evaporates in the heat-source-side heat exchanger 230. The low-pressure refrigerant evaporated in the heat-source-side heat exchanger 230 is drawn back into the compressor 210 through the first heat-source-side gas refrigerant tube 220c, the switching mechanism 220, and the intake tube 220b.

Though not described in detail, when the fluid flowing in the fluid circuit 300 is cooled by the refrigerant flowing in the refrigerant circuit 10 (when cooling heat is supplied from the refrigerant to the fluid flowing in the fluid circuit 300), the switching mechanism 220 is switched to the heat-source-side heat-radiating operation state (shown by the dashed lines in the switching mechanism 220 in FIG. 1) in the refrigerant circuit 10. In this case, the heat-source-side heat exchanger 230 functions as a heat emitter of refrigerant by conducting heat exchange between the refrigerant and the outdoor air. The refrigerant flowing in the refrigerant circuit 10 also evaporates in the usage-side heat exchanger 20, and the heat (cooling heat) of the refrigerant is supplied to the fluid flowing in the fluid circuit 300.

### (3-2) Actions of Devices Configuring Fluid Circuit

The actions of the devices configuring the fluid circuit 300 during an air-conditioning operation and a warm water supply operation will be described.

### (3-2-1) During Air-Conditioning Operation

During an air-conditioning operation, the switching mechanism 80 is switched to the first state (a state in which fluid flows from the fluid outflow tube 32 to the air conditioner 430 of the air conditioner unit 400 via the first supply tube 33 (refer to the arrow A1 in FIG. 1)) in the fluid circuit 300.

In this state, during an air-warming operation, the fluid circulating in the fluid circuit 300 is heated by the heat (warming heat) of the refrigerant in the usage-side heat exchanger 20. During an air-cooling operation, the fluid circulating in the fluid circuit 300 is cooled by the heat (cooling heat) of the refrigerant in the usage-side heat exchanger 20. The fluid heated/cooled in the usage-side heat exchanger 20 flows into the fluid outflow tube 32 to be drawn into the pump 50, increased in pressure, and then sent to the first supply tube 33. The control unit 90 performs capacity control on the pump 50 (control on the rotational speed of the pump motor 51) in accordance with factors such as the detection results pertaining to the state of the fluid detected by the sensors provided to the fluid circuit 300. The fluid sent to the first supply tube 33 is further sent to the air conditioner 430 via the forward external pipe 410. By means of the air conditioner 430, a space around the wall, the floor, or another part of the room is heated (air-warming)/cooled (air-cooling) by the fluid sent to the air conditioner 430.

### (3-2-2) During Warm Water Supply Operation

During a warm water supply operation, the switching mechanism 80 is switched to the second state (a state in which the fluid flows from the fluid outflow tube 32 to the warm water supply tank 70 via the second supply tube 34 (refer to the arrow A2 in FIG. 1)).

In this state, the fluid circulating in the fluid circuit 300 is heated by the heat (warming heat) of the refrigerant in the usage-side heat exchanger 20. The fluid heated in the usage-side heat exchanger 20 flows into the fluid outflow tube 32 to be drawn into the pump 50, increased in pressure, and then sent to the second supply tube 34. The control unit 90 performs capacity control on the pump 50 (control on the rotational speed of the pump motor 51) in accordance with factors such as the detection results pertaining to the state of the fluid detected by the sensors provided to the fluid circuit 300, and/or the result of detecting the water temperature in the warm water supply tank 70 detected by the sensor provided to the warm water supply tank 70. The fluid sent to the second supply tube 34 is further sent to the heat exchange coil 71 of the warm water supply tank 70. In the warm water supply tank 70, the water in the warm water supply tank 70 is heated by the fluid as a heating medium flowing in the heat exchange coil 71. Having passed through the heat exchange coil 71, the fluid returns to the usage-side heat exchanger 20 through the second return tube 44 and the fluid inflow tube 42.

### (3-3) Process Executed by Control Unit of Air-Conditioning and Warm Water Supply Unit When the Flow Rate of Fluid Flowing in the Fluid Circuit is Abnormal

The following is a description of the process executed by the control unit 90 of the air-conditioning and warm water supply unit 100 when the fluid is flowing in the fluid circuit 300 at an abnormal flow rate. The phrase "fluid flows in the fluid circuit 300 at an abnormal flow rate" means a state in which the flow rate of the fluid flowing in the fluid circuit 300 has decreased below the normal flow rate. Specifically, the phrase "fluid flows in the fluid circuit 300 at an abnormal flow rate" means a state in which the fluid flow rate detected by the flow sensor 60 is in a predetermined range when the pump 50 of the air-conditioning and warm water supply unit 100 is operated (e.g., when the fluid flow rate detected by the flow sensor 60 falls below the minimum flow rate at which the fluid should flow in the fluid circuit 300 when the pump 50 is operated). The predetermined range may, e.g., be fixed or it may fluctuate in accordance with the rotational speed of the pump motor 51.

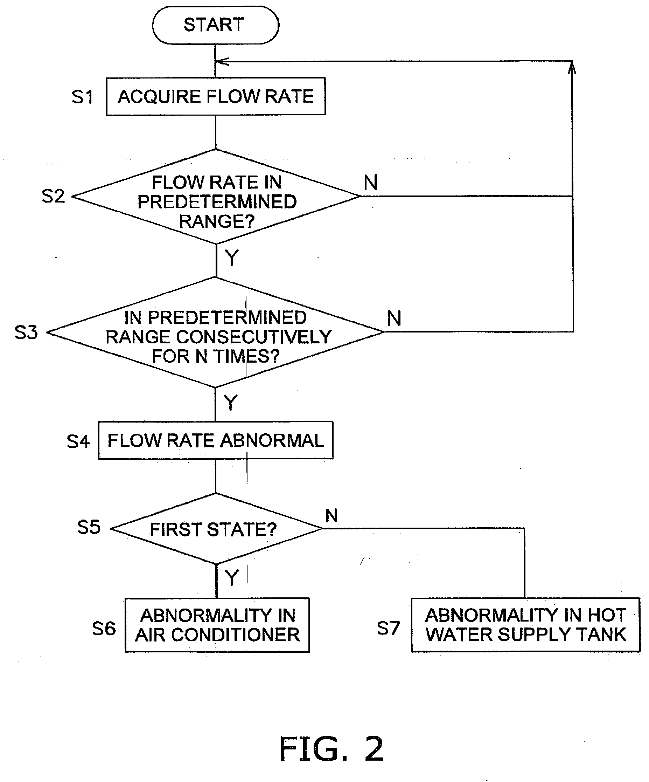

The process executed by the control unit 90 of the air-conditioning and warm water supply unit 100 when the fluid flows in the fluid circuit 300 at an abnormal flow rate (the abnormal flow rate detection process and the process executed when an abnormal flow rate is detected) will be described below with reference to the flowchart of FIG. 2.

The control unit 90 acquires the flow rate F of the fluid from the flow sensor 60 (step S1). The flow rate F detected by the flow sensor 60 is acquired by the control unit 90 at, e.g., periodic intervals.

Next, the control unit 90 determines whether or not the flow rate F is in a predetermined range. Specifically, the control unit 90 determines whether e.g., the flow rate F is within a flow rate range, between zero and the minimum flow rate at which the fluid should flow in the fluid circuit 300 when the pump 50 is operated (step S2). When the flow rate F is determined to be in the predetermined range, the process advances to step S3. When the flow rate F is determined to be outside of the predetermined range, the process returns to step S1.

Next, the control unit 90 determines whether or not the flow rate F has been determined to be in the predetermined range consecutively for N or more number of times in the determination of step S2 (step S3). N is a positive integer (i.e., an integer of 1 or greater) in this embodiment. A value appropriate for determining abnormal flow rates in the fluid circuit 300 should be selected as the value of N. When the flow rate F is determined to be in the predetermined range consecutively for N or more number of times in the determination of step S2, the process advances to step S4. When the number of times that the flow rate F is consecutively determined to be in the predetermined range is fewer than N, the process returns to step S1.

In step S4, the control unit 90 determines that the flow rate in the fluid circuit 300 is abnormal. The process then advances to step S5.

In step S5, the control unit 90 confirms whether or not the switching mechanism 80 is currently in the first state (whether the mechanism is in the first state or the second state). When the switching mechanism 80 is determined to be in the first state in step S5, the process advances to step S6. When the switching mechanism 80 is determined to not to be in the first state (determined to be in the second state) in step S5, the process advances to step S7.

In step S6, the control unit 90 assesses that the abnormal flow rate determined to have occurred in step S4 occurs while the fluid is flowing to the air conditioner 430 (the abnormal flow rate is caused by blockage or another problem in the pipes on the air conditioner 430 side). The control unit 90 then outputs the assessment result. Specifically, for example, the control unit 90 causes the assessment result to be displayed on a display part or the like (not shown) provided to the air-conditioning and warm water supply unit 100. However, such an arrangement is not provided by way of limitation. For example, the control unit 90 may cause the assessment result to be outputted on a display part of the remote control unit or the like of the air conditioner 430 and/or the warm water supply tank 70.

In step S7, the control unit 90 assesses that the abnormal flow rate determined to have occurred in step S4 occurs while the fluid is flowing to the warm water supply tank 70 (the abnormal flow rate is caused by blockage or another problem in the pipes in the warm water supply tank 70 side). The control unit 90 then outputs the assessment result. The output of the assessment result is the same as in step S6 and is therefore not described.

When an abnormal flow rate has occurred in step S4, the control unit 90 stops the pump 50 and stops the operation of the air-conditioning and warm water supply unit 100.

### (4) Characteristics

### (4-1)

The air-conditioning and warm water supply unit 100 is provided with the usage-side heat exchanger 20 as an example of a heat exchanger, the fluid inflow tube 42, the fluid outflow tube 32, the fluid supply part 31, the first supply tube 33, the fluid return part 41, the first return tube 43, the warm water supply tank 70, the second supply tube 34, the second return tube 44, the switching mechanism 80, the pump 50, the flow sensor 60 as an example of a flow rate detection means, and the control unit 90. The usage-side heat exchanger 20 transfers heat from the refrigerant to the fluid (water in the above embodiment). The fluid inflow tube 42 is connected to the usage-side heat exchanger 20. The fluid flows into the usage-side heat exchanger 20 through the fluid inflow tube 42. The fluid outflow tube 32 is connected to the usage-side heat exchanger 20. The fluid flows out from the usage-side heat exchanger 20 through the fluid outflow tube 32. The forward external pipe 410, through which the fluid flows to the air conditioner 430 in the air-conditioned target space, is connected to the fluid supply part 31. The first supply tube 33 connects the fluid outflow tube 32 and the fluid supply part 31. The return external pipe 420, through which the fluid returning from the air conditioner 430 flows, is connected to the fluid return part 41. The first return tube 43 connects the fluid inflow tube 42 and the fluid return part 41. In the warm water supply tank 70, water is heated by heat supplied from the fluid. The second supply tube 34 connects the fluid outflow tube 32 and the warm water supply tank 70. The second return tube 44 connects the fluid inflow tube 42 and the warm water supply tank 70. The switching mechanism 80 switches between the first state in which the fluid flows from the fluid outflow tube 32 to the air conditioner 430 via the first supply tube 33, and the second state in which the fluid flows from the fluid outflow tube 32 to the warm water supply tank 70 via the second supply tube 34. The pump 50 is arranged to the fluid outflow tube 32. The flow sensor 60, which is arranged to the fluid outflow tube 32, detects the flow rate of the fluid. The control unit 90 determines that the flow rate is abnormal when the fluid flow rate detected by the flow sensor 60 is in a predetermined range. When the flow rate is determined to be abnormal, the control unit 90 confirms whether the switching mechanism 80 is in the first state or the second state, assesses whether the abnormal flow rate occurs while the fluid flowing to the air conditioner 430 or the abnormal flow rate occurs while the fluid flowing to the warm water supply tank 70, and outputs the assessment result.

When the flow rate is determined to be abnormal, it is assessed whether the fluid flows toward the air conditioner 430 or the fluid flows toward the warm water supply tank 70, and the assessment result is output. Therefore, it is possible to easily discover whether the cause of the abnormality of the flow rate is present in the pipes or the like on the warm water supply tank 70 side or on the air conditioner 430 side, and shorten the work time for the operator performing repairs.

### (5) Modifications

Modifications of the above embodiment are presented below. The modifications may be combined as appropriate as long as they do not contradict each other.

### (5-1) Modification A

In the above embodiment, the heat source unit 200 and the air-conditioning and warm water supply unit 100 are configured as separate units; however, such an arrangement is not provided by way of limitation. For example, the heat source unit 200 and the air-conditioning and warm water supply unit 100 may be configured as a single unit.

### (5-2) Modification B

In the above embodiment, the control unit 90 stops the pump 50 and stops the operation of the air-conditioning and warm water supply unit 100 when the flow rate is determined to be abnormal; however, such an arrangement is not provided by way of limitation.

For example, the control unit 90 may be configured so that even when the flow rate is determined to be abnormal, if the abnormal flow rate has occurred while the switching mechanism 80 is in the first state (if the abnormal flow rate occurs while the fluid is flowing to the air conditioner 430), the control unit 90 allows operation to continue while the switching mechanism 80 is switched to the second state (an operation flowing the fluid to the warm water supply tank 70). For example, the control unit 90 may also be configured so that even when the flow rate is determined to be abnormal, if the abnormal flow rate has occurred while the switching mechanism 80 is in the second state, the control unit 90 allows operation to continue while the switching mechanism 80 is switched to the first state.

In this case, the control unit 90 preferably further performs the afore-described process executed when the flow-rate of fluid is abnormal. In other words, preferably, the control unit 90 further determines whether or not the flow rate is abnormal while outputting the assessment result (result of the assessment as to whether the abnormal flow rate has occurred while the fluid is flowing to the air conditioner 430 or while the fluid is flowing to the warm water supply tank 70), and when the control unit 90 assesses that the flow rate is abnormal while the fluid flowing in the other side from the outputting assessment result, the control unit outputs both that the abnormal flow rate occurs while the fluid flowing to the air conditioner 430 and that the abnormal flow rate occurs while the fluid flowing to the warm water supply tank 70. In this modification, when the flow rate of the fluid is abnormal, it is possible to discover that there are the causes of the abnormality in the pipes or the like both on the warm water supply tank 70 side and the air conditioner 430 side. Therefore, operators performing repairs can cope with the abnormality without omission.

### (5-3) Modification C

In the above embodiment, the switching mechanism 80 is arranged to the branching part where the fluid outflow tube 32 branches into the first supply tube 33 and the second supply tube 34. However, such an arrangement is not provided by way of limitation; the switching mechanism 80 may be arranged to the merging part where the first return tube 43 and the second return tube 44 merge with the fluid inflow tube 42.

### INDUSTRIAL APPLICABILITY

The present invention can be widely applied to air-conditioning and warm water supply units in which a fluid is sent from a heat exchanger, which is configured transfer heat from the refrigerant to the fluid, alternatively to either one of an air conditioner and a warm water supply tank in which the heat of the fluid is utilized.

### REFERENCE SIGNS LIST

- 20: Usage-side heat exchanger (heat exchanger)
- 31: Fluid supply part
- 32: Fluid outflow tube
- 33: First supply tube
- 34: Second supply tube
- 41: Fluid return part
- 42: Fluid inflow tube
- 43: First return tube
- 44: Second return tube
- 50 60: Pump Flow sensor (flow rate detection means)
- 70: Warm water supply tank
- 80: Switching mechanism
- 90: Control unit
- 100: Air-conditioning and warm water supply unit
- 410: Forward external pipe
- 420: Return external pipe
- 430: Air conditioner

### CITATION LIST

### PATENT LITERATURE

[Patent Literature 1] Japanese Laid-open Patent Application No. 2013-148266

## Claims

1. An air-conditioning and warm water supply unit (100), comprising:
a heat exchanger (20) configured to transfer heat from a refrigerant to a fluid;
a fluid inflow tube (42) connected to the heat exchanger, and configured to pass the fluid flowing into the heat exchanger;
a fluid outflow tube (32) connected to the heat exchanger, and configured to pass the fluid flowing from the heat exchanger;
a fluid supply part (31) connected to a forward external pipe (410), the forward external pipe (410) being configured to pass the fluid flowing to an air conditioner (430) disposed in an air-conditioned space;
a first supply tube (33) connecting the fluid outflow tube and the fluid supply part;
a fluid return part (41) connected to a return external pipe (420), the return external pipe (420) configured to pass the fluid returning from the air conditioner;
a first return tube (43) connecting the fluid inflow tube and the fluid return part;
a warm water supply tank (70) configured to heat water by heat supplied from the fluid;
a second supply tube (34) connecting the fluid outflow tube and the warm water supply tank;
a second return tube (44) connecting the fluid inflow tube and the warm water supply tank;
a switching mechanism (80) configured to switch between a first state in which the fluid flows from the fluid outflow tube to the air conditioner via the first supply tube, and a second state in which the fluid flows from the fluid outflow tube to the warm water supply tank via the second supply tube;
a pump (50) arranged to the fluid outflow tube or the fluid inflow tube;
a flow rate detection means (60) configured to detect a flow rate of the fluid; and
a control unit (90),
**characterized in that**
the flow rate detection means is arranged to the fluid outflow tube or the fluid inflow tube,
the control unit is configured to determine that the flow rate is abnormal when the fluid flow rate detected by the flow rate detection means is in a predetermined range, and
when the flow rate is determined to be abnormal, the control unit is configured to confirm whether the switching mechanism is in the first state or the second state, assess whether the abnormal flow rate occurs while the fluid flowing to the air conditioner or the abnormal flow rate occurs while the fluid flowing to the warm water supply tank, and output an assessment result.

2. The air-conditioning and warm water supply unit according to claim 1, wherein
the control unit is further configured to determine whether or not the flow rate is abnormal while outputting the assessment result, and
when the control unit assesses that the flow rate is abnormal while the direction of fluid flow is different from the output assessment result, the control unit is further configured to output both that the abnormal flow rate occurs while the fluid flows to the air conditioner and that the abnormal flow rate occurs while the fluid flows to the warm water supply tank.

## Patentansprüche

1. Klimatisierungs- und Warmwasserversorgungseinheit (100), mit:
einem Wärmetauscher (20), der konfiguriert ist, Wärme von einem Kältemittel auf ein Fluid zu übertragen;
einem Fluidzuflussrohr (42), das mit dem Wärmetauscher verbunden und konfiguriert ist, das Fluid zu leiten, das in den Wärmetauscher fließt;
einem Fluidabflussrohr (32), das mit dem Wärmetauscher verbunden und konfiguriert ist, das Fluid zu leiten, das aus dem Wärmetauscher fließt;
einem Fluidzufuhrteil (31), der mit einer externen Vorwärtsleitung (410) verbunden ist, wobei die externe Vorwärtsleitung (410) konfiguriert ist, das Fluid zu leiten, das zu einem Klimagerät (430) fließt, das in einem klimatisierten Raum angeordnet ist;
einem ersten Zufuhrrohr (33), das das Fluidabflussrohr und den Fluidzufuhrteil verbindet;
einem Fluidrücklaufteil (41), der mit einer externen Rücklaufleitung (420) verbunden ist, wobei die externe Rücklaufleitung (420) konfiguriert ist, das Fluid zu leiten, das vom Klimagerät zurückfließt;
einem ersten Rücklaufrohr (43), das das Fluidzuflussrohr und den Fluidrücklaufteil verbindet;
einem Warmwasserzufuhrtank (70), der konfiguriert ist, Wasser durch Wärme zu erwärmen, die vom Fluid zugeführt wird;
einem zweiten Zufuhrrohr (34), das das Fluidabflussrohr und den Warmwasserzufuhrtank verbindet;
einem zweiten Rücklaufrohr (44), das das Fluidzuflussrohr und den Warmwasserzufuhrtank verbindet;
einen Umschaltmechanismus (80), der konfiguriert ist, zwischen einen ersten Zustand, in dem das Fluid vom Fluidabflussrohr über das erste Zufuhrrohr zum Klimagerät fließt, und einen zweitem Zustand umzuschalten, in dem das Fluid vom Fluidabflussrohr über das zweite Zufuhrrohr zum Warmwasserzufuhrtank fließt;
einer Pumpe (50), die am Fluidabflussrohr oder am Fluidzuflussrohr angeordnet ist;
einem Durchflussmengenermittlungsmittel (60), das konfiguriert ist, eine Durchflussmenge des Fluids zu ermitteln; und
einer Steuereinheit (90),
**dadurch gekennzeichnet, dass**
das Durchflussmengenermittlungsmittel am Fluidabflussrohr oder am Fluidzuflussrohr angeordnet ist,
die Steuereinheit konfiguriert ist festzustellen, dass die Durchflussmenge anormal ist, wenn die durch das Durchflussmengenermittlungsmittel ermittelte Fluiddurchflussmenge in einem vorgegebenen Bereich liegt, und
wenn festgestellt wird, dass die die Durchflussmenge anormal ist, die Steuereinheit konfiguriert ist, zu bestätigen, ob sich der Umschaltmechanismus im ersten Zustand oder im zweiten Zustand befindet, zu beurteilen, ob die anormale Durchflussmenge auftritt, während das Fluid zum Klimagerät fließt, oder die anormale Durchflussmenge auftritt, während das Fluid zum Warmwasserzufuhrtank fließt, und ein Beurteilungsergebnis auszugeben.

2. Klimatisierungs- und Warmwasserversorgungseinheit nach Anspruch 1, wobei
die Steuereinheit ferner konfiguriert ist, festzustellen, ob die Durchflussmenge anormal ist, während sie das Beurteilungsergebnis ausgibt, und
wenn die Steuereinheit beurteilt, dass die Durchflussmenge anormal ist, während sich die Richtung des Fluidflusses von der Ausgabe des Beurteilungsergebnis unterscheidet, die Steuereinheit ferner konfiguriert ist, sowohl auszugeben, dass die anormale Durchflussmenge auftritt, während das Fluid zum Klimagerät fließt, als auch auszugeben, dass die anormale Durchflussmenge auftritt, während das Fluid zum Warmwasserzufuhrtank fließt.

## Revendications

1. Unité de climatisation et d'alimentation en eau chaude (100), comprenant :
un échangeur de chaleur (20) prévu pour transférer la chaleur d'un réfrigérant to a fluide ;
un conduit d'entrée de fluide (42) raccordé à l'échangeur de chaleur, et prévu pour conduire le fluide s'écoulant dans l'échangeur de chaleur ;
un conduit de sortie de fluide (32) raccordé à l'échangeur de chaleur, et prévu pour conduire le fluide s'écoulant de l'échangeur de chaleur ;
un partie d'alimentation en fluide (31) raccordée à une conduite d'amenée extérieure (410), ladite conduite d'amenée extérieure (410) étant prévue pour conduire le fluide s'écoulant vers un climatiseur (430) disposé dans un espace climatisé ;
un premier conduit d'alimentation (33) reliant le conduit de sortie de fluide et la partie d'alimentation en fluide ;
une partie de retour de fluide (41) raccordée à un conduit de retour extérieur (420), ledit conduit de retour extérieur (420) étant prévu pour conduire le fluide revenant du climatiseur ;
un premier conduit de retour (43) reliant le conduit d'entrée de fluide et la partie de retour de fluide ;
un réservoir d'alimentation en eau chaude (70) prévu pour chauffer l'eau avec la chaleur du fluide ;
un deuxième conduit d'alimentation (34) reliant le conduit de sortie de fluide et le réservoir d'alimentation en eau chaude ;
un deuxième conduit de retour (44) reliant le conduit d'entrée de fluide et le réservoir d'alimentation en eau chaude ;
un mécanisme de commutation (80) prévu pour commuter entre un premier état où le fluide s'écoule du conduit de sortie de fluide vers le climatiseur par le premier conduit d'alimentation, et un deuxième état où le fluide s'écoule du conduit de sortie de fluide vers le réservoir d'alimentation en eau chaude par le deuxième conduit d'alimentation ;
une pompe (50) montée sur le conduit de sortie de fluide ou le conduit d'entrée de fluide ;
un moyen de détection de débit (60) prévu pour détecter le débit du fluide ; et
une unité de commande (90),
**caractérisée en ce que**
le moyen de détection de débit est monté sur le conduit de sortie de fluide ou le conduit d'entrée de fluide,
l'unité de commande est prévue pour déterminer que le débit est anormal si le débit de fluide détecté par le moyen de détection de débit est compris dans une plage prédéfinie, et,
si le débit est déterminé comme étant anormal, l'unité de commande est prévue pour confirmer si le mécanisme de commutation est dans le premier état ou le deuxième état, évaluer si le débit anormal est présenté alors que le fluide circule vers le climatiseur ou si le débit anormal est présenté alors que le fluide circule vers le réservoir d'alimentation en eau chaude, et émettre un résultat d'évaluation.

2. Unité de climatisation et d'alimentation en eau chaude selon la revendication 1, où
l'unité de commande est en outre prévue pour déterminer si le débit est anormal ou non, en émettant le résultat d'évaluation, et où,
si l'unité de commande évalue que le débit est anormal quand la direction du flux de fluide diffère du résultat d'évaluation émis, l'unité de commande est en outre prévue pour émettre à la fois que le débit anormal est présenté alors que le fluide circule vers le climatiseur et que le débit anormal est présenté alors que le fluide circule vers le réservoir d'alimentation en eau chaude.
